Europäisches Patentamt

**European Patent Office**

Office européen des brevets

(19)

(11) Publication number: **0 014 045**
**B1**

(12) # EUROPEAN PATENT SPECIFICATION

(45) Date of publication of patent specification: **11.04.84**

(51) Int. Cl.³: **G 09 G 1/16, A 63 F 9/22**

(21) Application number: **80300076.9**

(22) Date of filing: **08.01.80**

(54) **Apparatus for controlling a display.**

(30) Priority: **15.01.79 US 3447**

(43) Date of publication of application:
**06.08.80 Bulletin 80/16**

(45) Publication of the grant of the patent:
**11.04.84 Bulletin 84/15**

(84) Designated Contracting States:
**DE FR GB SE**

(56) References cited:
**US - A - 3 611 348**
**US - A - 4 068 225**
**US - A - 4 129 859**

(73) Proprietor: **ATARI INC.**
**1265 Borregas Avenue**
**Sunnyvale, California 94086 (US)**

(72) Inventor: **Stubben, David R.**
**301 Merz Court**
**Milpitas, California (US)**

(74) Representative: **Beresford, Keith Denis Lewis et al,**
**R.G.C. Jenkins & Co. 12-15, Fetter Lane**
**London EC4A 1PL (GB)**

Courier Press, Leamington Spa, England.

Apparatus for controlling a display

Field of the Invention

The present invention is directed to apparatus for controlling a raster scan display, and particularly, but not exclusively, to a video game in which the display is scrolled in the horizontal direction under microprocessor control in response to player inputs.

Background Art

In a video system where it is desired to display selected portions of a larger available field, one technique has been to use a mechanical pictorial map with the television camera on an XY table; that is, a table which moves left and right or up and down. Such a technique is termed "scrolling" since the field is effectively being scrolled past the video camera from a relative motion standpoint. An analogous nonmechanical known technique uses a large capacity graphics computer which has the entire field stored in a pictorial memory, the computer providing a window on that memory to produce the display world on the TV screen. This latter method, of course, requires a very large program memory.

One technique for scrolling in the vertical direction only is shown in U.S. Patent No. 4,169,272, issued 25th September 1979, entitled "Apparatus for Simulating a Perspective View of Video Image and for storing Such Image with a Minimum Number of Bits" in the name of Rains, et al. This technique utilizes a vertical counter to directly address a graphics read-only memory (ROM), at different locations. Such a ROM, of course, includes the entire field. The technique, however, is not particularly adaptable to scrolling in a horizontal direction.

Other image shifting arrangements are disclosed in U.S. Patents Nos. 3,611,348, 4,068,225 and 4,129,859.

U.S. Patent Specification No. 3,611,348, for example, discloses an arrangement for displaying a moving line of characters. This is achieved by transmitting series video signals through a variable delay register and thereafter through a multi-tap delay line, and automatically altering the delay applied to the video signal, and thereby shifting the display, in accordance with the rate of arrival of transaction information.

U.S. Patent No, 4,129,859, on the other hand, discloses an arrangement in which a refresh memory stores character codes representing characters to be displayed on a CRT display screen. The memory is addressed by column and row addresses to read out the codes. The codes are used to address a character generator to read out picture data therefrom and thereby enable the characters to be displayed on the screen. The displayed characters can be shifted by altering the contents of column and row start address registers, which effectively alters the relationship between the addresses applied to the refresh memory and the respective display locations on the display screen.

Summary of the Invention

This invention provides apparatus for controlling the display of symbols on a video raster type display comprising:

timing means for generating horizontal and vertical timing signals;

a first memory for storing data indicative of the said symbols at addresses corresponding to locations on the video raster type display;

a second memory in the form of a graphics memory for storing pictorial video data representative of said symbols, the second memory providing the said video data to the video raster type display in response to the data addressed in the first memory;

address means for addressing said first memory in synchronism with the scanning of the video raster type display under the control of the timing signals;

indexing means for providing alterable indexing data to the address means to alter the correspondence between the display positions being scanned and the addresses generated in dependence of the index data, thereby to shift the image on the display; characterized by

delay means for selectively delaying communication of the said video data to the video raster type display, the delay being controlled by the least significant bits of an index word from the indexing means, the most significant bits of which index word form the said indexing data.

Thus, the apparatus of the invention can shift the image not only by altering the correspondence between the locations in the display memory and the display positions, but also by selectively delaying the picture data delivered to the display. The two shifting operations are controlled by respective portions of an index word. This arrangement is particularly suitable for permitting both fine scrolling, using the selective delay of the picture data, and coarse scrolling, by altering the correspondence between the memory locations and the display locations.

The apparatus of the invention is also well suited for permitting scrolling in the direction of the display lines of the raster scan display.

Brief Description of the Drawings

Figs. 1A—1C are plan views of video images;

Fig. 2 is a conceptual illustration of an entire playfield capable of being displayed and showing the portion of the field selected for display;

Figs. 3A—3B are examples of the building block graphics used to construct a playfield display;

Fig. 4 is a map of the information stored in the RAM and illustrates the correlation between the RAM information and the building block graphics stored in a graphics PROM;

Fig. 5 is a block diagram illustrating the circuit logic of an apparatus of the present invention;

Fig. 6 is a representative timing diagram illustrating access to the RAM on a time-share basis; and

Fig. 7 is a diagrammatic illustration of a portion of the contents of the RAM.

Detailed Description of the Preferred Embodiment

The present invention is most advantageously practiced in conjunction with generating objects on a video display screen of the type utilizing an image-forming beam that traverses the screen along a plurality of sequentially scanned horizontal lines. Movement of the beam is synchronized to the video data supplied by the apparatus of the invention by conventional horizontal and vertical synchronizing signals, including horizontal and vertical retrace intervals.

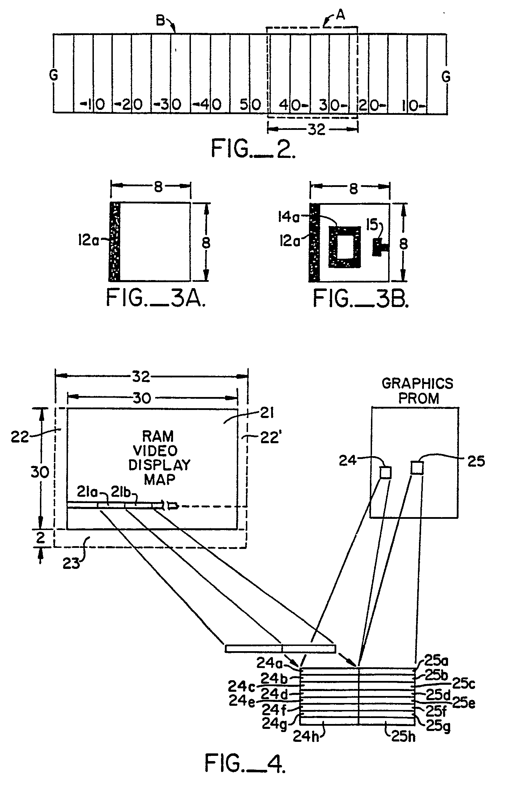

Typical video images and the sequential relationship between them, as they are shown on video display screen 10, are illustrated in Figs. 1A—1C and 2, the Figures 1A—1C being shown in relative progressing time sequences. These video images are used in a game termed "FOOTBALL" where game players, by means of manually controllable input devices, control the relative position of the movable objects displayed in accordance with certain instructions that are provided. For the purpose of the following discussion, it should be understood that the video scan lines generated on display 10 by the image-forming beam are oriented perpendicular to the yard lines designated in Figs. 1A—1C by the reference numeral 12.

Typically, video objects displayed on video display screens 10 may be categorized as playfield objects and movable objects. Playfield objects, such as yard lines 12, the numerals 14, and the direction pointers 15, are termed playfield objects which are scrolled as an indirect result of the player inputs. The second category, termed movable objects, comprise offense players, designated by O's 16, including ball carrier 18, and defense players designated by X's 20.

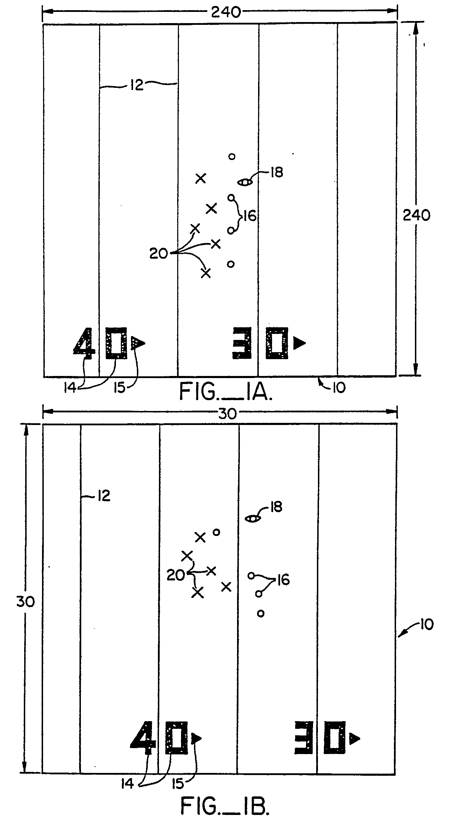

Conceptually, the playfield objects shown on video display screen 10 are a selected portion of a larger field of playfield objects; that is, as Fig. 2 illustrates, display 10 presents a viewer with a windowlike view A of a larger field B. Here, the view A is movable along the field B between the opposing representative goal lines G. The field B may be thought of as being broken up into an M by N matrix of smaller building blocks — termed "stamps" — for the purpose of displaying these various playfield building blocks or stamps to construct the actual video display elements making up the field (e.g., yard markers 12 and numerals 14) as well as other information such as messages (not shown). As described more particularly below, these stamps are listed and have their actual video display characteristic or shape stored in a graphics memory. A yard line 12, for example, is composed of several stamps which are selected and arranged in proper format for display as will be more particularly discussed. As Fig. 1B indicates, the video produced on display 10 is formed from a 30 × 30 array of these stamps.

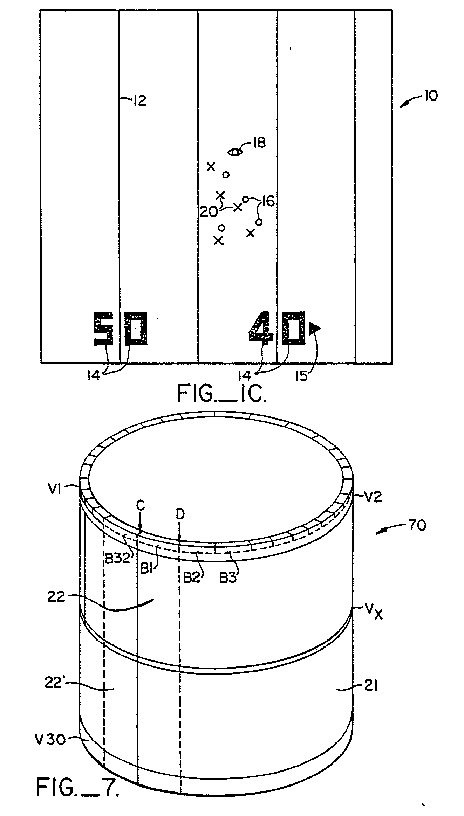

The game is played by players selecting offensive and defensive plays to set the game in motion. Operation of manual controls by players of the game will effect movement of objects 16, 18 and 20. Thus, for example, a player operating controls (not shown) that effect and direct movement of the "offensive" movable objects 16 and 18 can cause them to move away from the representative 30-yard line and toward the 40-yard line (Fig. 1A). At the same time, of course, the defensive player would manipulate controls to move the defense movable objects 20 in an attempt to establish video display coincidence between at least one of the defensive movable objects 20 and ball carrier 18 to establish a representative tackle. Depending upon the success (or lack thereof) of the game players in controlling their respective ones of the movable objects 16, 18 or 20, representative movement of the field of play between goal lines G will be effected by sequentially displaying selected portions of the overall field B, i.e., by "scrolling" the field B. Thus, for example, one play of the game may commence at a field position as represented by Fig. 1A and progress as illustrated by Fig. 1B and then by Fig. 1C.

As the ball carrier object 18 moves in either direction between goals G of the representative field, the yard line markers and numerals associated therewith move in a direction (a horizontal direction as viewed in Figs. 1A—1C) that simulates travel of the motion objects along the length of the field B.

The present description concerns only the generation of playfield objects. Movable object generation can be accomplished in the manner disclosed in U.S. Patent No, 4,116,444, but is preferably accomplished in accordance with the teachings of our co-pending European patent application No. 79302396.1 (publication No. 13801). The disclosure of each of the above is hereby incorporated by reference.

The field B exists only in theory, and selected portions of the information required for specifying the graphics to be displayed are periodically constructed and stored in a random access memory (RAM) by a microprocessor unit as will be described below. For the purposes of the present discussion, however, it is convenient to think of the field B as existing in some memory location as an ordered matrix of stamp selection information.

There are, in fact, relatively few stamps used to construct a playfield display. Figs. 3A and 3B illustrate two representative stamps. Fig. 3A illustrates the stamp of a yard marker segment 121a, while Fig. 3B illustrates an alpha numeric stamp comprising a zero numeral 14a, point 15 and a yard marker segment 12a. Other stamps used in the football game under discussion include the numerics 1—5, and the letter G to designate the goal line. As will now be apparent, yard marker stamps, such as that shown in Fig. 3A, are displayed in a vertical column to form one of the yard markers 12 illustrated in Figs. 1 and 2.

In the preferred embodiment, each stamp is an 8 × 8 element array of data bits used to form the actual display graphics. Elements in both the horizontal and vertical directions are the smallest resolution elements of the video display which has, as indicated in Fig. 1A, 240 elements (beam positions) for each horizontal line and 240 raster lines. Thus, a playfield is constructed on display 10 by selecting and positioning the desired stamps to form a 30 × 30 stamp array on the display (Fig. 1B).

The information indicative of the relative position of each stamp to be displayed is stored in a random access memory. This information is used to address a graphics programmable read-only memory (PROM) in which the stamps are stored, the output of which provides the actual graphics for the video display. The information stored in the RAM is arranged so that sequential addressing of the RAM will cause the PROM to provide the graphics necessary for an ordered 30 × 30 array of stamps. Thus, data stored in the RAM is only indicative of the video display.

Fig. 4 illustrates the correlation between the contents of the RAM and PROM. As indicated, the RAM has 32 × 32 storage locations, each storage location being one byte (eight digital bits) in size. During actual scan time (i.e., during display of one video field of playfield graphics) only the graphics specified by the information stored in the 30 × 30 RAM portion designated by reference numeral 21 is actually displayed. However, the entire RAM portion designated by reference numerals 21, 22 and 22' is addressed. The information stored in the one-byte columns 22 and 22' is used for updating purposes described below and does not result in the display of graphics in video display 10. A row 23 of stored information is used for control of the movable objects 16, 18, 20.

As noted above, each of the addressable entries of memory portion 21 of the RAM is associated with or corresponds to a unique location in the video display 10. The information kept at each RAM entry designates the particular location in the PROM containing the stamp to be dispayed at a video display location corresponding to that entry. For example, as Fig. 4 illustrates, entry 21a contains information that, when applied to the PROM, causes the PROM to provide stamp 24. The next sequential entry 21b causes the PROM to provide stamp 25.

As Fig. 4 also illustrates, each stamp comprises 8 bytes, each byte containing 8 bits of graphics data, used when assembled to form the 8 × 8 stamp array referred to above. Further, each of the RAM entries designates an 8-byte stamp — just as, for example, entry 21a designates the 8 bytes 24a—24h that comprise stamp 24 in Fig. 4. Similarly, the next successive RAM location 21b designates stamp 25 comprising 8 bytes 25a—25h. Selection of the individual ones of the bytes 24a—24h and 25a—25h to be displayed during each horizontal line scan is accomplished in the manner described below.

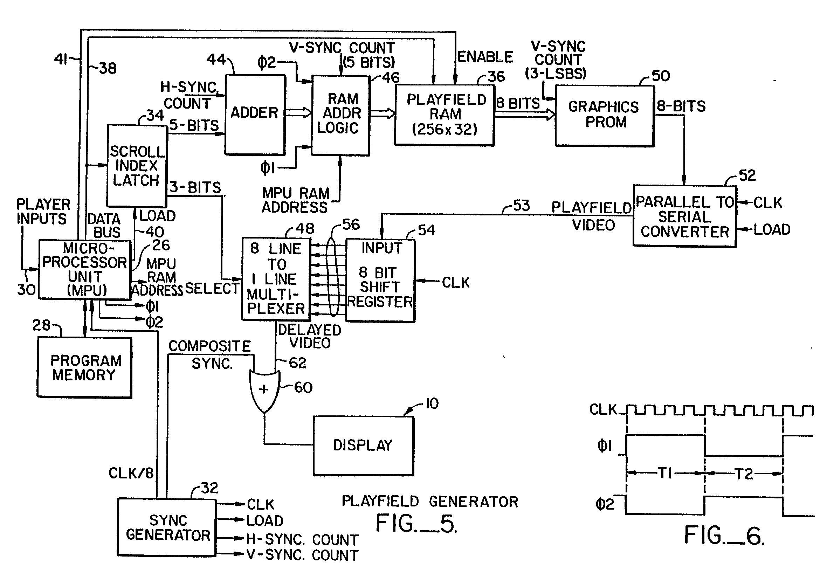

Turning now to Fig. 5, the playfield generator of the present invention includes a microprocessor 26 to which is connected a program memory 28 to provide for overall control of the various inputs comprising the apparatus. Input ports 30 to the microprocessor 26 communicate motion signals from the player controls (not shown) to the microprocessor 26. Timing pulses for synchronizing microprocessor control with the display video, as well as for providing control for various playfield generator functions, are generated by a sync generator 32. Thus, sync generator 32 provides a first clock (CLK) signal used by the generator to effect certain synchronous clocking operations and a second clock (CLK/8) signal for use by microprocessor 26. In addition, the sync generator 32 contains internal horizontal and vertical sync counters (not shown) clocked by the CLK signal and which produce H-sync and V-sync counts, respectively. Each counter is a modulo 256 counter and the counts produced are used for control and addressing functions of the playfield generator as will be described. These counts (i.e., H-sync and V-sync) are also used by sync generator 32 to produce a composite sync signal which is combined with the video generated by the playfield generator to drive display 10. In effect, therefore, the H-sync and V-sync counts provide the playfield generator with information specifying the position of the beam used to construct display 10 during each line scan. Finally, sync generator 32 provides a periodic load signal (LOAD) to effect information transfers, as will be explained below.

Microprocessor 26 is coupled to a scroll index latch 34 and a playfield random access memory (RAM) 36 by a data bus 38, which communicates digital information to these elements — typically in one-byte (eight bit) segments. Microprocessor 26 is also coupled to the scroll index latch 34 by a load line 40 which commands the latch to accept and temporarily store information appearing upon the data bus 38. Similarly, an enable line 41 communicates write instructions from the microprocessor to the playfield RAM 36 to cause the RAM to store data present on the data bus 38.

The scroll index latch 34 stores one-byte (eight bits) of digital information. A first portion of each byte (five of the eight bits in the preferred embodiment) of information held by the scroll index latch 34 is communicated by playfield RAM 36 via an adder 44 and a RAM address logic unit 46. A second portion of the same byte (the three remaining bits) held by scroll index latch 34 is communicated to an 8-to-1 multiplexer 48.

The RAM 36 is capable of being addressed by the microprocessor 26 or by adder 44 and a portion of V-sync count in direct memory access (DMA) mode. In order to address the $32 \times 30$ array (equalling 960 bytes) of stamp positional information formed by RAM portions 21, 22 and 22' (Fig. 4), at least a 10-bit address is required which provides the capability of addressing $2^{10}$ or 1024 locations. The address generated for RAM access during DMA mode (hereinafter designated the DMA generated address) comprises the five most significant bits (MSB's) of V-sync count (which selects one of 30 lines of 32 bytes), and a five-bit sum of the five MSB's of H-sync count and the first (5-bit) portion of the scroll index (which selects one of the 32 bytes in the selected line). Any carry generated is discarded.

It should be noted that the DMA generated address provides, in effect, modulo 32 addressing of the 32 bytes in each row of the $32 \times 30$ byte playfield array stored in RAM 36. That is, the five MSB's of H-sync count provide the addressing for 32 bytes during each horizontal scan time. However, by adding the 5-bit portion of the scroll index to H-sync count, a row of 32 bytes is still addressed, but the first and each succeeding byte read out of the RAM 36 are shifted in time or offset by the 5-bit portion of the scroll index-relative to H-sync count.

Fig. 7 is a schematic illustration of this offset. Portions 21, 22 and 22' of the RAM map of Fig. 4 are shown as a cylinder with the left and right edges of the map joined at vertical line C. If the 5-bit portion of the scroll index (contained in scroll index latch 34) is zero, no offset is effected. The DMA generated address begins at row V1, byte B1 and sequentially addresses each succeeding byte of the row V1 until byte B32 is reached, at which time addressing begins again with byte B1 of either row V1 or the next succeeding row V2. If, however, the 5-bit portion of the scroll index is non-zero, the H-sync count is offset by a corresponding amount, and addressing begins and ends with different bytes in the same row. Thus, for example, if the 5-bit portion of the scroll index increases or offsets H-sync count by one, the addressing of each row (V1—V30) of the map begins at byte B2, progresses through to B32 and ends by addressing byte B1; that is, the RAM map 70 has been precessed by one byte from vertical line C to vertical line D. The effect is to scroll the video display by one stamp column.

The RAM address logic 46 contains logic circuitry of known design that selects the addressing (MPU RAM addressing or the DMA generated address) for RAM 36 in several ways. First, the RAM address logic 46 communicates the MPU RAM address from the microprocessor 26 to the RAM during the horizontal and vertical retrace intervals. During active scan time, the address logic 46 interleaves communication of an address formed by the information provided by adder 44 and V-sync count with the MPU RAM address to the RAM. This interleaving is accomplished in response to Ø1 and Ø2 clock signals provided by microprocessor 26. The relationships between the Ø1, Ø2 and CLK signals are illustrated in Fig. 6; Ø1 and Ø2 are generated by the microprocessor from the CLK/8 signal provided by the sync generator 32. The Ø1 and Ø2 clock signals (as is the CLK/8 signal) are the CLK signal divided by eight.

The RAM 36 address interleaving is accomplished by multiplexing the MPU RAM address and the DMA generated address using the Ø1 and Ø2 signals as the multiplex control. Thus, during the time designated at T1 in Fig. 6, the DMA generated address is gated to the RAM 36; during the time designated as T2, the MPU RAM address is gated to the RAM 36.

As noted above, playfield RAM 36 contains data at specific addressable locations that correspond to the display positions of the various playfield building block stamps. The correspondence between the locations and the display portions is altered by changing the five MSB's of the scroll index. The stamps are listed and have their actual display characteristics or shape stored in a graphics PROM 50. Graphics PROM 50 is controlled by playfield RAM 36, in conjunction with the three least significant bits (LSBs) of V-sync count to access the actual video display from the PROM in eight-bit segments. The manner of access establishes the arrangement and appropriate format in which the video data is to be presented on the display screen to form the particular view A of the conceptual overall field B, as indicated in Figs. 1 and 2.

The graphics information provided by the PROM 50 is obtained by applying to the PROM an address formed from the combination of one byte of information from the RAM 36 and the three LSBs of V-sync count. The RAM information selects the particular stamp and the three LSBs of V-sync count select the particular 8-bit byte of the stamp. Thus, each one of the 30 lines of 32 bytes (Fig. 4) is read out of the RAM 36 eight consecutive times, during each field of display.

The eight bits of information provided by graphics PROM 50 are communicated and applied to parallel inputs of parallel-to-serial converter 52. The information is accepted by the converter upon receipt of the LOAD signal from the sync generator 32. Then, in response to the CLK signal, the contents of converter 50 are shifted out of the converter onto line 53, forming serial playfield video. This playfield video is applied to the input of an eight-stage, serial shift register 54, also clocked by the CLK signal. The eight parallel outputs 56 (one output from each stage) of the shift register 54 are applied to the multiplexer 48. The multiplexer 48 selects one of the eight parallel shift register outputs 56 and communicates the selected output to a summer 60 via delayed video line 62, where it is combined with composite sync from generator 32 to drive display 10.

The video display graphics information applied to the serial input of the shift register 54 is shifted through the various eight stages (not shown) of the register in response to the CLK signal applied thereto. Depending upon the states of the three bits applied to the multiplexer 48 from the scroll index latch 34, one of the eight outputs 56 of the shift register 54 is selected for communication to the video line 62 via the multiplexer 48. The playfield video displayed during the active television line is thus delayed, and therefore relatively positioned along the line, as a result of one of the eight shift register outputs 56 being communicated to summer 60.

The playfield RAM 36 is updated as often as every third vertical blanking interval. That is, in the time period between each update of the playfield RAM, the scrolling of view A along field B (Fig. 2) has not effectively advanced far enough to necessitate an updating of the RAM. This is due in part to the fact that some scrolling of the video display is effected to some extent by delaying the video applied to the summer circuit 60. However, when the playfield RAM is updated, only one of the two columns 22, 22' of information is loaded — corresponding to the (left or right) edge of the display 10 toward which scrolling is effected, or in other words the edge away from which the image is shifting.

In operation, microprocessor 26 receives player information on input ports 30 and computes playfield stamp selection information that is stored in RAM 36. During display time the RAM 36 and the PROM 50 are sequentially addressed by the H-sync and V-sync counts generated by sync generator 32. As the game progresses, requiring the playfield to be scrolled, a scroll index is calculated with the three-bit portion modified from that presently held by scroll index 34. During the next vertical blanking interval, the newly calculated scroll index is transferred to and stored in the scroll index latch 34 by the microprocessor 26. The new three-bit portion of the scroll index effect selection of a new one of the eight parallel shift register outputs 56 to cause the graphics information of each active horizontal scan line appearing on the video display to be delayed, depending upon which the outputs 56 is selected. The video display is thus scrolled.

However, scrolling by video delay is effective for seven horizontal bits only. Once the maximum video delay is selected, the RAM 36 must be updated with a new column of information for selecting a new (vertical) column of stamps to be displayed. In addition, the 5-bit portion of the scroll index must be updated so that the H-sync count portion of the DMA generated address is offset by one to precess the addressing of RAM 36 as explained above. The 3-bit portion is also updated as appropriate. This update of RAM 36 and scroll index latch 34 can be done during the same or different vertical blanking period, so long as the RAM 36 is updated first.

In summary, the present embodiment of the invention effects scrolling in the scan line axis in two respects: first, the video display is scrolled by a video delay technique; this technique provides a scrolling effect having a minimum resolution equal to one horizontal bit (i.e., beam position along a given scan line) and a maximum range of seven bits. Second, a scrolling effect is produced by updating the RAM 36 with one column (30 bytes) of stamp selection information of 30 stamps and then offsetting the address applied to the RAM 36 so that the RAM is accessed at a shifted location. As noted above, 32 stamp elements are accessed from PROM 50 during each of the 240 (8 × 30) horizontal scan lines. However, the horizontal blanking of video display 10 is set so that the two stamp elements in columns 22 and 22' are blanked each scan line; thus, only 30 stamp elements are displayed during each active scan line of video display 10. Because new information is written into the RAM 36, scrolling can be performed over as large a range as is desired.

As will now be apparent, the present embodiment provides apparatus for scrolling a video display presented in raster-type format in a direction along the display lines with a minimum of additional circuitry. More specifically, the amount of memory storage required to completely define the game playfield elements (i.e., the size of the graphics PROM 50) is minimized. Thus, for games having a relatively simple playfield, such as football, a PROM of only minimal size is required. Alternatively, a plurality of sets of stamps, each defining a different playfield, may be stored in a single PROM of reasonable size, thus permitting the construction of a video game apparatus affording a wide variety of different games, with some or all of the games having the scrolling feature.

While the above provides a full and complete disclosure of the preferred embodiment of the present invention, various modifications, alternate constructions and equivalents may be employed without departing from the true spirit and scope of the invention. For example, some scrolling can also be effected in the vertical direction by offsetting the V-sync count used to address the RAM 36 as well as by updating the RAM with lines of information of 32 stamps. Therefore, the above description and illustrations should not be construed as limiting the scope of the invention, which is defined by the appended claims.

**Claims**

1. Apparatus for controlling the display of symbols on a video raster type display (10) comprising:

timing means (32) for generating horizontal and vertical timing signals;

a first memory (36) for storing data indicative of the said symbols at addresses corresponding to locations on the video raster type display (10);

a second memory (50) in the form of a graphics memory for storing pictorial video data representative of said symbols, the second memory providing the said video data to the video raster type display (10) in response to the data addressed in the first memory (36);

address means (44, 46) for addressing said first memory (36) in synchronism with the scanning of the video raster type display under the control of the timing signals;

indexing means (26, 34) for providing alterable indexing data to the address means to alter the correspondence between the display positions being scanned and the addresses generated in dependence of the index data, thereby to shift the image on the display; characterised by

delay means (48, 54) for selectively delaying communication of the said video data to the video raster type display (10), the delay being controlled by the least significant bits of an index word from the indexing means (26, 34), the most significant bits of which index word form the said indexing data.

2. Apparatus as claimed in claim 1, wherein the delay means (48, 54) includes shift register means (54) having an input (53) and a number of outputs (56), and means (48) responsive to said least significant bits for communicating a selected one of the shift register means outputs (56) to said display (10).

3. Apparatus as claimed in claim 1 or claim 2, wherein said address means (44, 46) is operable to combine horizontal and vertical counts produced in response to said horizontal and vertical timing signals with said most significant bits in order to generate addresses for said first memory (36).

4. Apparatus as claimed in claim 3, wherein said graphics memory (50) is also responsive to said vertical count for generating said video data.

5. Apparatus as claimed in any preceding claim, wherein said graphics memory (50) is a programmable read-only memory.

6. Apparatus as claimed in any preceding claim, including a microprocessor (26) operable to store said data representing symbols to be displayed in said first memory (36), the address means (44, 46) being responsive to a clock signal for communicating addresses generated by said microprocessor (26) to the first memory (36) during a first state of the clock signal, and for addressing said first memory (36) in synchronism with the scanning of the display (10) during a second state of the clock signal.

7. Apparatus as claimed in any one of claims 1 to 5, including microprocessor means (26) for generating said index word.

8. Apparatus as claimed in any one of claims 1 to 5, including means (26) for entering new data, representing symbols which are to be brought into view on the display by an image shifting operation, into said first display memory (36) at addresses which, after alteration of said index word to effect said image shifting operation, correspond to display locations at an edge of the display away from which the image shifts.

9. Apparatus as claimed in any preceding claim, wherein the delay produced by said delay means (48, 54) is such that the shifting of the image is in the direction of the display lines scanned by said raster type display (10).

10. Apparatus as claimed in any preceding claim, wherein the alteration in the correspondence between the display positions and the addresses generated by said address means (44, 46) is such that the shifting of the image is in the direction of the display lines scanned by said raster type display (10).

11. Apparatus as claimed in any preceding claim, wherein the delay produced by said delay means (48, 54) and the alteration in the correspondence between the display positions and the addresses generated by said address means (44, 46) are operable to cause shifting of the image in the same direction.

**Revendications**

1. Appareil pour contrôler les symboles de visualisation sur un affichage vidéo de type à trame (10) comprenant:

des moyens de synchronisation (32) destinés à générer des signaux de synchronisation horizontale et verticale,

une première mémoire (36) destinée à stocker des données indicatives desdits symboles à des adresses correspondant à des emplacements sur l'affichage de type à trame (10),

une seconde mémoire (50) sous forme de mémoire de caractères graphiques pour stocker les données vidéo picturales représentatives desdits symboles, la seconde mémoire fournissant lesdites données vidéo à l'affichage vidéo de type à trame (10) en réponse aux données adressées dans la première mémoire (36),

des moyens d'adressage (44, 46) permettant d'adresser la première mémoire (36) en synchronisation avec le balayage de l'affichage vidéo de type à trame sous le contrôle des signaux de synchronisation,

des moyens d'indexage (26, 34) destinés à fournir des données d'indexage modifiables aux moyens d'adressage pour modifier la correspondance entre les emplacements de l'affichage en cours de balayage et les adresses générées en fonction des données d'indexage, afin de déplacer l'image sur l'affichage, caractérisé par

des moyens de retard (48, 54) destinés à retarder de manière sélective la communication desdites données vidéo à l'affichage vidéo de type à trame (10), le retard étant contrôlé par les bits les moins significatifs d'un mot d'indexage provenant des moyens d'indexage (26, 34), les bits les plus significatifs de ce mot d'indexage formant les données d'indexage.

2. Appareil selon la revendication 1, caractérisé en ce que les moyens de retard (48, 54) comprennent des moyens d'enregistrement à décalage (54) comprenant une encrée (53) et plusieurs sorties (56), et des moyens (48) sensibles aux bits les moins significatifs pour communiquer audit affichage (10) une sortie sélectionnée des sorties (56) des moyens d'enregistrement à décalage.

3. Appareil selon la revendication 1 ou 2, dans lequel les moyens d'adressage (44, 46) ont pour fonction d'associer les comptes horizontal et vertical produits en réponse aux signaux de synchronisation horizontale et verticale aux bits les plus significatifs afin de générer des adresses de ladite première mémoire (36).

4. Appareil selon la revendication 3, dans lequel la mémoire de caractères graphiques (50) est en outre sensible au compte vertical pour générer lesdites données vidéo.

5. Appareil selon l'une quelconque des revendications précédentes, dans lequel la mémoire de caractères graphiques (50) est une mémoire morte programmable.

6. Appareil selon l'une quelconque des revendications précédentes, comprenant un microprocesseur (26) servant à stocker dans ladite première mémoire (36) des données représentant les symboles à visualiser, les moyens d'adressage (44, 46) étant sensibles à un signal d'horloge pour communiquer des adresses générées par ledit microprocesseur (26) à la première mémoire (36) pendant un premier état du signal d'horloge et pour adresser ladite première mémoire (36) en synchronisme avec le balayage de l'affichage (10) pendant un second état du signal d'horloge.

7. Appareil selon l'une quelconque des revendications 1 à 5, comprenant des moyens à microprocesseur (26) destinés à générer le mot d'indexage.

8. Appareil selon l'une quelconque des revendications 1 à 5, comprenant des moyens (26) permettant d'inscrire de nouvelles données, représentatives de symboles devant être visualisés sur l'affichage par une opération de décalage d'image, dans ladite première mémoire (36) à des adresses qui, après modification dudit mot d'indexage pour effectuer l'opération de décalage de l'image, correspondent à des emplacements de l'affichage au niveau d'un bord de l'affichage duquel l'image s'éloigne.

9. Appareil selon l'une quelconque des revendications précédentes, caractérisé en ce que le retard produit par les moyens de retard (48, 54) est tel que le décalage de l'image se fait dans la direction des lignes d'affichage balayées par ledit affichage de type à trame (10).

10. Appareil selon l'une quelconque des revendications précédentes, dans lequel la modification de la correspondance entre les emplacements d'affichage et les adresses générées par lesdits moyens d'adressage (44, 46) est telle que le décalage de l'image se fait dans la direction des lignes de l'affichage balayées par ledit affichage de type à trame (10).

11. Appareil selon l'une quelconque des revendications précédentes, dans lequel le retard produit par les moyens de retard (48, 54) et la modification de la correspondance entre les emplacements de l'affichage et les adresses générées par lesdits moyens d'adressage (44; 46) ont pour fonction de provoquer le décalage de l'image dans la même direction.

**Patentansprüche**

1. Vorrichtung zum Steuern des Anzeige von symbolen auf einer rasterartigen Videoanzeige (10) mit

einer Synchronisiereinrichtung (32) zum Erzeugen von horizontalen und vertikalen Synchronisationssignalen;

einem ersten Speicher (36) zum Speichern von die Symbole bezeichnenden Daten bei den auf der rasterartigen Videoanzeige (10) entsprechenden Orten;

einem zweiten Speicher (50) in der Form eines Grafikspeichers zum Speichern einer bildlichen Videodatendarstellung der Symbole, wobei der zweite Speicher die Videodaten der rasterförmigen Videoanzeige (10) nach Maßgabe der in dem ersten Speicher (36) adressierten Daten zuführt;

einer Adressiereinrichtung (44, 46) zum Adressieren des ersten Speichers (36) synchron zu dem Abtasten der rasterförmigen Videoanzeige unter Steuerung durch die Synchronsignale;

eine Indizierungsvorrichtung (26, 34) zum Zuführen von änderbaren Indizierungsdaten zu der Adressierungsvorrichtung zum Ändern der Korrespondenz zwischen den abgetasteten Anzeigepositionen und den in Abhängigkeit von den Indizierungsdaten erzeugten Adressen, um damit das Bild auf der Anzeige zu verschieben; gekennzeichnet durch

eine Verzögerungseinrichtung (48, 54) zum selektiven Verzögern des Informationsaustausches der Videodaten zu der rasterartigen Videoanzeige (10), wobei die Verzögerung durch die niederwertigsten bits eines Indexwortes der Indizierungsvorrichtung (26, 34) gesteuert wird, wobei die höchstwertigen bits des Indexwortes die Indizierungsdaten bilden.

2. Vorrichtung nach Anspruch 1, wobei die Verzögerungseinrichtung (48, 54) eine einen Eingang (53) und eine Anzahl von ausgängen (56) aufweisende Schieberegistervorrichtung (54) sowie eine Einrichtung (48) umfaßt, welche auf die niederwertigsten bits anspricht um aus den Ausgängen (56) der Schieberegistereinrichtung einen ausgewählten Ausgang der Anzeige (10) mitzuteilen.

3. Vorrichtung nach Anspruch 1 oder 2, bei der die Adressierungseinrichtung (44, 46) zum Kombinieren der nach Maßgabe der horizontalen und vertikalen Synchronisiersignale erzeugten horizontalen und vertikalen Zählungen mit den höchstwertigen bits betreibbar ist, um Adressen für den ersten Speicher (36) zu erzeugen.

4. Vorrichtung nach Anspruch 3, bei der der Grafikspeicher (50) ebenfalls auf die vertikale Zählung anspricht um die Videodaten zu erzeugen.

5. Vorrichtung nach einem der voranstehenden Ansprüche, bei der der Grafikspeicher (50) ein programmierbarer nur-Lese-Speicher ist.

6. Vorrichtung nach einem der vorangehenden Ansprüche, welche einen Mikroprozessor (26) enthält, welcher zum Speichern der die anzuzeigenden Symbole respresentierenden Daten in dem ersten Speicher (36) betreibbar ist, wobei die Adressierungseinrichtung (44, 36) auf ein Taktsignal anspricht um die von dem Mikroprozzesor (26) erzeugten Adressen dem ersten Speicher (36) während eines ersten Zustandes des Taktsignales mitzuteilen und um den ersten Speicher (36) während eines zweiten Zustandes des Taktsignales synchron mit dem Abtasten der Anzeige (10) zu adressieren.

7. Vorrichtung nach einem der Ansprüche 1 bis 5, welche eine Mikroprozessoreinrichtung (26) zum Erzeugen des Indexwortes enthält.

8. Vorrichtung nach einem der Ansprüche 1 bis 5, welche eine Einrichtung (26) zum Eingeben neuer Daten, welche mittels eines Bildverschiebevorganges auf der Anzeige sichtbar zu machende Symbole representieren, in den ersten Speicher (36) bei Adressen, welche nach Änderung des Indexwortes zur Ausführung des Bildverschiebevorganges den Anzeigeorten bei einer Ecke der Anzeige entsprechen, von der das Bild wegverschoben wird.

9. Vorrichtung nach einem der voranstehenden Ansprüche, bei der die von der Verzögerungseinrichtung (48, 54) hervorgerufene Verzögerung derart ist, daß die Verschiebung des Bildes in Richtung der von der rasterartigen Anzeige (10) abgetasteten Anzeigelinien liegt.

10. Vorrichtung nach einem der voranstehenden Ansprüche, bei der die Änderung in der Korrespondenz zwischen den Anzeigepositionen und den von der Adressierungseinrichtung (44, 46) erzeugten Adressen derart ist, daß die Verschiebung des Bildes in der Richtung der von der rasterartigen Anzeige (10) abgetasteten Anzeigelinien liegt.

11. Vorrichtung nach einem der voranstehenden Ansprüche, bei der die von der Verzögerungseinrichtung (48, 54) hervorgerufene Verzögerung und die Änderung in der Korrespondenz zwischen den Anzeigepositionen und den durch die Adressierungseinrichtung (44, 46) erzeugten Adressen verwendbar sind, um eine Verschiebung des Bildes in der gleichen Richtung zu veranlassen.

FIG.__IA.

FIG.__IB.

FIG._1C.

FIG._7.

FIG._2.

FIG._3A.

FIG._3B.

GRAPHICS
PROM

RAM
VIDEO
DISPLAY
MAP

FIG._4.

PLAYFIELD GENERATOR

FIG._5.

FIG._6.

0 014 045